# EUROPÄISCHE PATENTSCHRIFT

(11) **EP 1 540 905 B1**
(45) Veröffentlichungstag und Bekanntmachung des Hinweises auf die Patenterteilung: **14.06.2006**
(21) Anmeldenummer: 03769182.1
(22) Anmeldetag: 08.09.2003
(51) Int. Cl.: H04L 12/64

(54) **VERFAHREN ZUR ÜBERTRAGUNG VON DATENTELEGRAMMEN IN EINEM GESCHALTETEN, ZYKLISCHEN KOMMUNIKATIONSSYSTEM**
METHOD FOR THE TRANSMISSION OF DATA TELEGRAMMES IN A SWITCHED CYCLICAL COMMUNICATION SYSTEM
PROCEDE DE TRANSMISSION DE MESSAGES DE DONNEES DANS UN SYSTEME DE COMMUNICATION CYCLIQUE COMMUTE

(30) Priorität: 20.09.2002 DE 10243850
(43) Veröffentlichungstag der Anmeldung: 15.06.2005
(73) Patentinhaber: SIEMENS AKTIENGESELLSCHAFT, 80333 München (DE)
(72) Erfinder: KRAUSE, Karl-Heinz, 90475 Nürnberg (DE); WEBER, Karl, 90518 Altdorf (DE); BRÜCKNER, Dieter, 96199 Unterleiterbach (DE); KLOTZ, Dieter, 90768 Fürth (DE)
(86) Internationale Anmeldenummer: PCT/DE2003/002980
(87) Internationale Veröffentlichungsnummer: WO 2004/030297

(56) Entgegenhaltungen:
- EP-A- 1 128 612
- US-A1- 2002 064 157

## Beschreibung

Die Erfindung betrifft ein Verfahren zur Übertragung von Datentelegrammen in einem geschalteten, zyklischen Kommunikationssystem. Ferner betrifft die Erfindung ein entsprechendes Kommunikationssystem und einen Teilnehmer eines solchen Kommunikationssystems.

Unter einem Kommunikationssystem versteht man ein System mit mehreren Teilnehmern, die mittels Netzwerkverbindungen zum Zweck des gegenseitigen Austausches von Daten bzw. der gegenseitigen Übertragung von Daten untereinander verbunden sind. Die zu übertragenden Daten werden dabei als Datentelegramme verschickt, d.h., die Daten werden zu einem oder mehreren Paketen zusammengepackt und in dieser Form über die Netzwerkverbindungen an die entsprechenden Empfänger gesendet. Man spricht deshalb auch von Datenpaketen. Der Begriff "Übertragung von Daten" wird dabei im weiteren synonym zur oben erwähnten Übertragung von Datentelegrammen oder Datenpaketen verwendet.

Teilnehmer eines Kommunikationssystems sind beispielsweise zentrale Automatisierungsgeräte, Programmier-, Projektierungs- und Bediengeräte, Peripheriegeräte wie z.B. Ein-/Ausgabe-Baugruppen, Antriebe, Aktoren, Sensoren, speicherprogrammierbare Steuerungen (SPS) oder andere Kontrolleinheiten, Computer, oder Maschinen, die elektronische Daten mit anderen Maschinen austauschen, insbesondere Daten von anderen Maschinen verarbeiten. Teilnehmer werden auch Netzwerkknoten oder Knoten genannt.

Unter Kontrolleinheiten werden im Folgenden Regler- oder Steuerungseinheiten jeglicher Art verstanden, aber auch beispielsweise Koppelknoten (so genannte Switches) und/oder Switch Controller. Als Kommunikationssysteme bzw. Datennetze werden beispielsweise geschaltete Kommunikationssysteme, wie Switched Ethernet, Industrial Ethernet, insbesondere aber auch isochrones Realtime Ethernet, verwendet.

Kommunikationssysteme mit Transferraten ≥ 100 MB/s sind üblicherweise geschaltete Hochleitungsdatennetze und bestehen aus einzelnen Punkt-zu-Punkt-Verbindungen mit so genannten aktiven Knoten oder Koppelknoten, auch Switches genannt, die jeweils zwischen die einzelnen Teilnehmer geschaltet sind. Jeder Koppelknoten weist in der Regel mehrere Ports auf und kann deshalb je nach Port-Anzahl mit der entsprechenden Anzahl von Teilnehmern verbunden sein. Switches sind in der Regel separate Geräte, können also selbst Teilnehmer sein, die jedoch verstärkt direkt in die angeschlossenen Geräte bzw. Teilnehmer integriert werden.

In verteilten Automatisierungssystemen, beispielsweise im Bereich Antriebstechnik, müssen bestimmte Daten zu bestimmten Zeiten bei den dafür bestimmten Teilnehmern eintreffen und von den Empfängern verarbeitet werden. Man spricht dabei von echtzeitkritischen Daten bzw. Datenverkehr, da ein nicht rechtzeitiges Eintreffen der Daten am Bestimmungsort zu unerwünschten Resultaten beim Teilnehmer führt.

In solchen verteilten Automatisierungssystemen wäre eine parallele Nutzung der Internet-Kommunikationstechnologie in Hard- und Software sowie eine Anbindung an das Internet bzw. Intranet sehr vorteilhaft. Internet-Kommunikation ist jedoch spontane Kommunikation, d.h. Zeitpunkt und Datenmenge eines Datentransfers kann nicht vorausbestimmt werden. Die dadurch möglichen Kollisions-/Warte-Situationen auf den Netzverbindungsleitungen (bei shared medium Datennetzen) oder in den Switches (bei geschalteten Datennetzen) führen deshalb zu einem nichtdeterministischen Verhalten.

Nicht vorhersagbare Verzögerungen in Switches haben zwei Ursachen:
- Ein laufender Datentransfer kann nicht unterbrochen werden. In jedem Switch kann also ein echtzeitkritisches Datentelegramm auf einen gerade laufenden Transfer eines Datentelegramms maximaler Länge treffen. Die worst case Verzögerungszeit kann hier zwar berechnet werden, die daraus resultierende Zeit ist aber in einem Datennetz mit sehr vielen in Serie geschalteten Switches nicht akzeptabel.
- Bei Überlast-Situationen wird bei Speicherknappheit von einem Switch zeitweise kein Datentelegramm mehr angenommen. Eventuell werden Datentelegramme sogar verworfen. Voraussagen für worst case sind in diesem Fall überhaupt nicht möglich.

Damit ist eine zeitlich hochpräzise Kommunikation, wie sie für viele Aufgaben der Automatisierungstechnik notwendig ist, nicht zu gewährleisten. Insbesondere ist keine Mischung einer solchen Echtzeitkommunikation mit sonstiger spontaner Internet-Kommunikation möglich.

Die bisher bekannten Verfahren setzen ein Scheduling voraus. Damit werden Wartesituationen vermieden. Bei geschalteten Netzwerken genügt es, wenn alle beteiligten Switches dieses Scheduling erzwingen. Damit ist der Anschluss beliebiger Endteilnehmer möglich. Das dafür bekannte System und Verfahren zur Übertragung von Daten über schaltbare Datennetze, insbesondere das Ethernet, ist als isochrone Echtzeitkommunikation oder IRT-Kommunikation, welche einen Mischbetrieb von echtzeitkritischer und nichtechtzeitkritischer, insbesondere Inter- bzw. Intranet-basierter Datenkommunikation erlaubt, aus der deutschen Patentanmeldung DE 100 58 524.8 bekannt.

Ein weiteres Verfahren ist aus US 2002/064157 A1 bekannt.

Das dort offenbarte System und Verfahren ermöglicht sowohl eine echtzeitkritische (RT; Real-Time) als auch eine nicht echtzeitkritische Kommunikation (NRT; Non-Real-Time) in einem schaltbaren Datennetz, bestehend aus Teilnehmern und Koppeleinheiten, beispielsweise eines verteilten Automatisierungssystems, durch einen zyklischen Betrieb.

Die echtzeitkritische Kommunikation wird im Voraus geplant, dadurch sind für alle zu übertragenden, echtzeitkritischen Datentelegramme die Sendezeitpunkte bzw. die Zeitpunkte für die Weiterleitung der echtzeitkritischen Datentelegramme vor Beginn der Datenübertragung bekannt, d. h. die Zeitdauer des Bereichs zur Übertragung von nichtechtzeitkritischen Daten ist automatisch durch die Zeitdauer des Bereichs zur Übertragung von echtzeitkritischen Daten festgelegt.

Die Zeitdauer eines Übertragungszyklus ist veränderbar, wird aber vor dem Zeitpunkt der Datenübertragung, beispielsweise durch einen Steuerungsrechner, wenigstens einmal festgelegt und ist für alle Teilnehmer und Koppeleinheiten des schaltbaren Datennetzes jeweils gleich lang.

Mit dem in der deutschen Patentanmeldung DE 100 58 524.8 beschriebenen Verfahren ist es also möglich, Ethernet-basierte Kommunikationsnetze, insbesondere isochrone Ethernet-basierte Kommunikationsnetze, aufzubauen,
- deren Knoten im Submikrosekundenbereich synchron arbeiten und
- die zyklische Kommunikation exakt zu den geplanten Zeitpunkten ausführen (isochrone Echtzeitkommunikation oder IRT-Kommunikation), unabhängig von beliebiger sonstiger, spontaner Kommunikation (NRT-Kommunikation oder Non-Realtime-Kommunikation) auf bzw. in diesem Netz.

Alle Teilnehmer an der isochronen Echtzeitkommunikation müssen aber auf spezieller Kommunikations-Hardware basieren, um
- die Zeitsynchronität zu erzielen und
- Telegramme exakt zum geplanten Zeitpunkt abzusenden.

Dieses Verfahren ist für beliebige Topologien einsetzbar, es erfordert aber die Hinterlegung der Planungsdaten des deterministischen Kommunikationsverkehrs nicht nur bei den beteiligten Endknoten, sondern in allen beteiligten durchleitenden Switches.

Der Erfindung liegt daher die Aufgabe zugrunde, ein verbessertes Verfahren, ein verbessertes Kommunikationssystem sowie einen Teilnehmer des Kommunikationssystems anzugeben, welches eine deterministische Datenkommunikation ohne Hinterlegung der Planungsdaten des deterministischen Kommunikationsverkehrs in allen beteiligten durchleitenden Switches erlaubt.

Diese Aufgabe wird durch ein Verfahren zur Übertragung von Datentelegrammen in einem geschalteten, zyklischen Kommunikationssystem mit mehreren Teilnehmern gelöst, die mittels Netzwerkverbindungen miteinander verbunden sind, wobei jeder Teilnehmer als Sender und/oder Empfänger von Datentelegrammen ausgeprägt ist und jeder Teilnehmer wenigstens einen Pufferspeicher zur Speicherung von Datentelegrammen aufweist, wobei die Datentelegramme in Übertragungszyklen übertragen werden und jeder Übertragungszyklus wenigstens einen ersten Bereich zur Übertragung von Datentelegrammen mit echtzeitkritischen Daten und wenigstens einem weiteren Bereich zur Übertragung von Datentelegrammen mit nichtechtzeitkritischen Daten aufweist, mit folgenden Schritten:
- Kennzeichnung der Datentelegramme, die echtzeitkritische Daten enthalten;
- Festlegung des zeitlichen Beginns des ersten Bereichs eines Übertragungszyklus innerhalb des Übertragungszyklus;
- Sicherstellung, dass die Übertragung eines nichtechtzeitkritischen Datentelegramms zu Beginn des ersten Bereichs des Übertragungszyklus abgeschlossen ist;
- Reservierung freien Speicherplatzes im Pufferspeicher (40) jedes Teilnehmers (1, 2, 3, 4, 5) zur Zwischenspeicherung der echtzeitkritischen Datentelegramme (23, 24, 25);
- automatische Einstellung der zeitlichen Länge des ersten Bereichs (20) des Übertragungszyklus (31) mittels eines Timeout-Verfahrens, wobei mit dem zeitlichen Beginn (21) des ersten Bereichs (20) des Übertragungszyklus (31) oder nach dem Ende des Sendens eines echtzeitkritischen Datentelegramms (23) eine Timeout-Zeit (27) zu laufen beginnt, wobei der erste Bereich (20) des Übertragungszyklus (31) mit dem Ablauf der Timeout-Zeit (27) beendet wird, falls innerhalb dieser Timeout-Zeit (27) kein Sendebeginn eines echtzeitkritischen Datentelegramms (23) liegt, oder wobei der erste Bereich (20) nicht beendet wird, falls innerhalb der Timeout-Zeit (27) der Sendebeginn eines echtzeitkritischen Datentelegramms (23) liegt.

Diese der Erfindung zugrunde liegende Aufgabe wird ebenfalls durch einen Teilnehmer für ein Kommunikationssystem mit den Merkmalen des unabhängigen Patentanspruchs 9 sowie durch ein Kommunikationssystem mit den Merkmalen des unabhängigen Patentanspruchs 19 gelöst.

Durch das Timeout-Verfahren wird gewährleistet, dass jeweils alle zur Übertragung anstehenden echtzeitkritischen Daten innerhalb des aktuellen Ubertragungszyklus auch übertragen werden. Gleichzeitig wird auch nur diejenige Zeitspanne innerhalb eines Übertragungszyklus in Anspruch genommen; die zur Übertragung der echtzeitkritischen Datentelegramme nötig ist. Ist beispielsweise innerhalb eines aktuellen Übertragungszyklus kein echtzeitkritisches Datentelegramm zu senden, so wird der erste Bereich des betreffenden Übertragungszyklus unmittelbar mit Ende der Timeout-Zeit beendet. Der erste Bereich des jeweiligen aktuellen Übertragungszyklus verlängert sich dagegen jeweils mit dem Senden eines echtzeitkritischen Datentelegramms dann, wenn der Beginn eines solchen Sendevorgangs innerhalb, also vor Ende des Ablaufs der Timeout-Zeit liegt.

Nach dem Ende der Übertragung des echtzeitkritischen Datentelegramms wird der Lauf der Timeout-Zeit erneut gestartet. Wird vor dem Ablauf der Timeout-Zeit mit dem Senden eines weiteren echtzeitkritischen Datentelegramms begonnen, verlängert sich der erste Bereich des jeweiligen aktuellen Übertragungszyklus weiter, bis der Sendevorgang abgeschlossen ist. Danach fängt wiederum die Timeout-Zeit zu laufen an. Dieses Verfahren wird so lange fortgesetzt, bis eine Timeout-Zeit abläuft, ohne dass ein erneuter Sendebeginn eines echtzeitkritischen Datentelegramms innerhalb dieser Timeout-Zeit liegt. Mit dem Ende der abgelaufenen Timeout-Zeit wird dann der erste Bereich des jeweiligen aktuellen Übertragungszyklus beendet und der weitere Bereich des jeweiligen aktuellen Übertragungszyklus, der bis zum Ende des Übertragungszyklus noch zur Verfügung steht, kann zur Übertragung nichtechtzeitkritischer Datentelegramme, insbesondere von spontanem Internet- bzw. Intranetdatenverkehr, genutzt werden.

Nach einer bevorzugten Ausführungsform der Erfindung ist das Kommunikationssystem aus einem oder mehreren Segmenten aufgebaut, wobei wenigstens ein Segment keine Verzweigungen und/oder keine Zusammenführungen aufweist. Für ein solches Kommunikationssystem, insbesondere ein Kommunikationssystem, welches nur aus Segmenten besteht, die keine Verzweigungen und/oder keine Zusammenführunqen aufweisen, also für einfache Topologien, beispielsweise lineare Topologien oder Ringtopologien, ist das erfindungsgemäße Verfahren besonders effizient einsetzbar.

Nach einer weiteren bevorzugten Ausführungsform der Erfindung werden Datentelegramme, die echtzeitkritische Daten enthalten, mit einer eindeutigen Header-Kennung gekennzeichnet. Dadurch wird ein besonderer Telegrammtyp eingeführt, der beispielsweise von der Hardware erkannt wird, wodurch Datentelegramme, die nichtechtzeitkritische Daten enthalten, von den echtzeitkritischen Datentelegrammen unterscheidbar werden.

Nach einer weiteren bevorzugten Ausführungsform der Erfindung wird ein nichtechtzeitkritisches Datentelegramm, das vor dem zeitlichen Beginn des ersten Bereichs des Übertragungszyklus bei einem Teilnehmer zum Senden ansteht, nicht gesendet, sondern im Pufferspeicher des jeweiligen Teilnehmers zwischengespeichert, falls die Übertragung des zu sendenden Datentelegramms nicht bis zum zeitlichen Beginn des ersten Bereichs des Übertragungszyklus abgeschlossen ist, und erst nach dem Ende des ersten Bereichs des Übertragungszyklus gesendet. Dadurch wird für den zur Übertragung von echtzeitkritischen Datentelegrammen reservierten ersten Bereich eines übertragungszyklus, der beispielsweise nicht notwendigerweise unmittelbar am Anfang eines Übertragungszyklus anfängt, gewährleistet, dass der erste Bereich zu einem festen, vorbestimmten Zeitpunkt beginnt und dieser Beginn auch garantiert wird. Dies wird vom jeweiligen Teilnehmer dahingehend überwacht, dass der Datentransfer eines zur Sendung anstehenden, vorangehenden, nichtechtzeitkritischen Datentelegramms nicht in die Zeitphase des ersten Bereichs hineinragt. Wäre dies der Fall, so wird der Sendevorgang des betreffenden nichtechtzeitkritischen Datentelegramms nicht gestartet, sondern das entsprechende Datentelegramm wird sofort im Pufferspeicher des jeweiligen Teilnehmers zwischengespeichert und erst nach Beendigung der echtzeitkritischen Datenübertragung, also nach Ende des ersten Bereichs, gesendet. Es ist also gewährleistet, dass innerhalb der Zeitphase des ersten Bereichs eines Übertragungszyklus exklusiv nur echtzeitkritische Datentelegramme übertragen werden, die entsprechend beim Versenden bzw. zur Weiterleitung höchste Priorität haben und deshalb auch Flusskontrollmechanismen ignorieren.

Nach einer besonders bevorzugten Ausführungsform der Erfindung ist die zeitliche Dauer der Timeout-Zeit einstellbar. Die benötigte Zeitdauer kann so je nach Bedarf angepasst werden.

Nach einer weiteren bevorzugten Ausführungsform der Erfindung wird zur Zwischenspeicherung der echtzeitkritischen Datentelegramme im Pufferspeicher des jeweiligen Teilnehmers freier Speicherplatz reserviert, wobei die maximale Größe des zu reservierenden freien Speicherplatzes der Menge der beim jeweiligen Teilnehmer einzuspeisenden Daten bzw. Datentelegrammen entspricht. Dabei wird zur Steuerung der Reservierung des freien Speicherplatzes im Pufferspeicher des jeweiligen Teilnehmers eine Markierung gesetzt, die der maximalen Größe des zu reservierenden freien Speicherplatzes entspricht. Darüber hinaus werden bei Unterschreitung des durch die Markierung gekennzeichneten, zu reservierenden freien Speicherplatzes im Pufferspeicher des jeweiligen Teilnehmers echtzeitkritische Datentelegramme und/oder Steuerungstelegramme vom jeweiligen Teilnehmer angenommen oder nichtechtzeitkritische Datentelegramme zurückgewiesen und/oder verworfen. Der für eine eventuelle Zwischenspeicherung von echtzeitkritischen Datentelegrammen maximal notwendige freie Speicherplatz steht somit immer zur Verfügung, d.h. es ist gewährleistet, dass kein echtzeitkritisches Datentelegramm aufgrund von Speicherplatzproblemen, beispielsweise fehlendem freien Speicherplatz, verloren geht, wodurch eine erhebliche Störung des entsprechenden Kommunikationssystems, insbesondere des verteilten Automatisierungssystems, auftreten würde.

Dieser maximal notwendige freie Speicherplatz lässt sich bei einfachen Topologien, also Kommunikationssystemen ohne Verzweigungen und/oder ohne Zusammenführungen, beispielsweise von linienförmigen oder ringförmigen Anordnungen der Teilnehmer eines Kommunikationssystems, lokal einfach berechnen. Vorausgesetzt, die Datentransferraten sind auf den jeweiligen Netzverbindungsstrecken zwischen den einzelnen Teilnehmern gleich, entspricht dieser maximal notwendige freie Speicherplatz jeweils der Menge der Daten bzw. Datentelegramme, die lokal von den jeweiligen Teilnehmern eingespeist werden. Dabei liegt die worst-case-Annahme zugrunde, dass zuerst alle lokal eingespeisten Daten bzw. Datentelegramme versendet werden, bevor durchzuleitende Daten bzw. Datentelegramme weitergeleitet werden. Dieser Speicherplatz muss entsprechend vorab reserviert werden. Dazu wird eine Markierung, die zur Flusssteuerung vorhandene Low Water Mark, gesetzt. Diese so genannte Low Water Mark ist ein Maß für den noch zur Verfügung stehenden freien Speicherplatz im Pufferspeicher des jeweiligen Teilnehmers. Wird diese Grenze unterschritten, werden vom jeweiligen Teilnehmer nur noch echtzeitkritische Datentelegramme akzeptiert, d.h. angenommen, ggf. zwischengespeichert und weitergeleitet. Darüber hinaus werden nur noch Datentelegramme, die zur Flusssteuerung dienen, angenommen, während sämtliche übrigen Datentelegramme, insbesondere nichtechtzeitkritische Datentelegramme, abgewiesen bzw. weggeworfen werden.

Bei komplexeren Topologien muss ein erhöhter maximal notwendiger freier Speicherplatz zum Zwischenspeichern der ankommenden Datentelegramme, insbesondere bei Netzknoten, bei denen Zusammenführungen auftreten, reserviert werden, da an solchen Zusammenführungen Rückstausituationen auftreten können.

Werden die jeweiligen Einspeisezeitpunkte aller echtzeitkritischen Datentelegramme bei den Teilnehmern in das Kommunikationsnetz vorab geplant, so lässt sich der Speicherplatzbedarf im jeweiligen Pufferspeicher der entsprechenden Teilnehmer auf einen implementierungsabhängigen konstanten Minimalwert senken. Die Länge der reservierten Zeitphase des jeweiligen aktuellen Übertragungszyklus, innerhalb der garantiert alle echtzeitkritischen Datentelegramme übertragen werden, ergibt sich somit aus der Menge der, über eine Verbindungsstrecke zwischen zwei Teilnehmern zu übertragenden echtzeitkritischen Daten, zuzüglich der, bis zu dieser Verbindungsstrecke notwendigen Übertragungszeit.

Von besonderem Vorteil ist es darüber hinaus, dass die offenbarten Verfahren in Automatisierungssystemen, insbesondere bei und in Verpackungsmaschinen, Pressen, Kunststoffspritzmaschinen, Textilmaschinen, Druckmaschinen, Werkzeugmaschinen, Robotern, Handlingsystemen, Holzverarbeitungsmaschinen, Glasverarbeitungsmaschinen, Keramikverarbeitungsmaschinen sowie Hebezeugen eingesetzt bzw. verwendet werden können.

Im Weiteren werden bevorzugte Ausführungsbeispiele der Erfindung mit Bezugnahme auf die Zeichnungen näher erläutert. Es zeigen:
- FIG 1: ein Blockschaltbild eines Ausführungsbeispiels eines erfindungsgemäßen linienförmigen Kommunikationssystems,
- FIG 2: ein Blockschaltbild eines Ausführungsbeispiels eines erfindungsgemäßen ringförmigen Kommunikationssystem und
- FIG 3: ein Blockschaltbild, welches einen Übertragungszyklus sowie das Prinzip der automatischen Ermittlung einer reservierten Zeitphase zeigt.

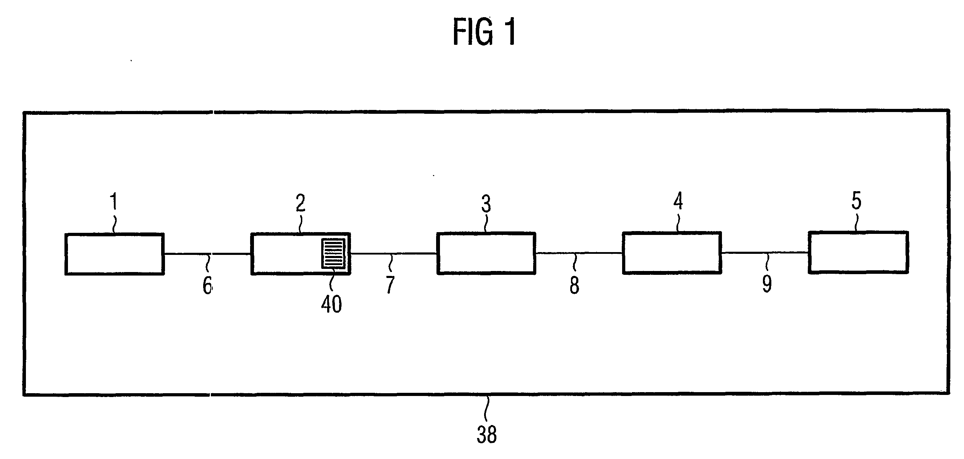

FIG 1 zeigt ein Blockschaltbild eines Ausführungsbeispiels eines erfindungsgemäßen linienförmigen Kommunikationssystems 38. Das gezeigte Kommunikationssystem 38 stellt beispielsweise ein verteiltes, echtzeitkritisches Automatisierungssystem dar. Das vorliegende Kommunikationssystem 38 ist darüber hinaus ein geschaltetes Kommunikationsnetz, wobei es sich beispielsweise um ein Realtime Ethernet handelt. Das vorliegende Kommunikationssystem 38 ist ein zyklisch arbeitendes Systems, d.h., dass Datenübertragungen in einem oder mehreren Übertragungszyklen bzw. Kommünikationszyklen stattfinden.

Das gezeigte Kommunikationssystem 38 besteht aus mehreren Teilnehmern 1, 2, 3, 4 und 5, die gleichzeitig sowohl als Sender als auch als Empfänger von Datendiagrammen ausgeprägt sind. Die Teilnehmer 1, 2, 3, 4 und 5 können beispielsweise als Rechner, als sonstige Automatisierungsgeräte, z.B. als Antriebe, oder auch als separate Koppeleinheiten, also Switches, bevorzugt als Realtime Ethernet Switches, ausgeführt sein. Jeder der Teilnehmer 1, 2, 3, 4 und 5 des Kommunikationssystems 38 kann jedoch auch eine in den Teilnehmer integrierte Koppeleinheit, insbesondere ein Realtime Ethernet Switch, aufweisen. Auf die Abbildung der integrierten Switches wurde aus Gründen der übersichtlichen Darstellung verzichtet. Die Switches dienen zum Einspeisen und/oder zum Empfangen und/oder zur Weiterleitung der zu übertragenden Datentelegramme, insbesondere der echtzeitkritischen Datentelegramme. Die Teilnehmer 1, 2, 3, 4, 5 werden auch als Netzknoten bezeichnet.

Jeder der Teilnehmer 1, 2, 3, 4, 5 weist zumindest einen Pufferspeicher auf, wobei aus Gründen der Übersichtlichkeit nur der Pufferspeicher 40 des Teilnehmers 2 abgebildet und bezeichnet wurde. Die Teilnehmer 1, 2, 3, 4, 5 des Kommunikationssystems 38 sind linienförmig angeordnet und sind untereinander durch die Netzwerkverbindungen 6, 7, 8 und 9 verbunden.

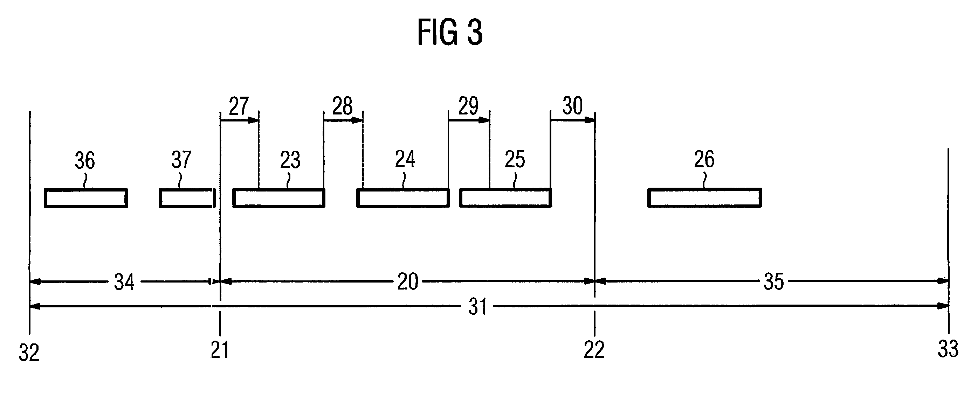

Zur Unterscheidung der Datentelegramme, die echtzeitkritische Daten enthalten und der Datentelegramme, die nichtechtzeitkritische Daten enthalten, werden die echtzeitkritischen Datentelegramme beispielsweise beim Einspeisen durch einen Teilnehmer, z.B. Teilnehmer 1, mit einer eindeutigen Header-Kennung versehen. Dadurch ist jeder Teilnehmer, bzw. Switch in der Lage, ankommende Datentelegramme nach ihrem Inhalt zu unterscheiden und entsprechend bei der Weiterleitung zu behandeln. Dies ist nötig, da es sich um ein zyklisches Kommunikationssystem handelt, bei dem, wie erwähnt, die Übertragung der Daten in einem oder mehreren Übertragungszyklen erfolgt. Jeder der Kommunikationszyklen bzw. Übertragungszyklen weist erfindungsgemäß zumindest einen ersten Bereich innerhalb des Übertragungszyklus auf, der ausschließlich zur Übertragung von echtzeitkritischen Datentelegrammen reserviert ist. Dieser Bereich befindet sich zeitlich gesehen beispielsweise innerhalb des jeweiligen Übertragungszyklus, so dass vor Beginn des ersten Bereichs und nach Ende des ersten Bereichs weitere Übertragungsbereiche innerhalb des jeweiligen Übertragungszyklus zur Verfügung stehen, die ausschließlich einer nichtechtzeitkritischen Kommunikation, also beispielsweise spontanem Internetdatenverkehr, vorbehalten ist. Eine nähere Erläuterung findet sich in der Figurenbeschreibung zu FIG 3.

Im Kommunikationssystem 38 ist beispielsweise der Teilnehmer 1 ein Steuerungsrechner, der echtzeitkritische Daten an den Teilnehmer 5, beispielsweise ein beliebiges Automatisierungsgerät, insbesondere ein Antrieb, sendet. Der Teilnehmer 5 erhält neben den echtzeitkritischen Daten von Teilnehmer 1 auch echtzeitkritische Daten von den Teilnehmern 2, 3 und 4, beispielsweise echtzeitkritische Peripherie-Abbilder.

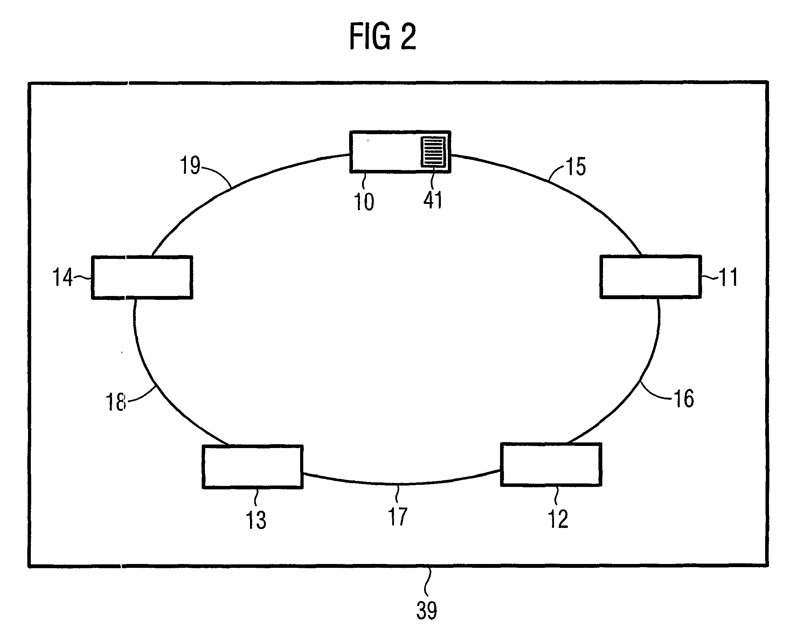

In einem echtzeitkritischen Kommunikationssystem sind gewöhnlich die Einspeisezeitpunkte aller echtzeitkritischen Datentelegramme durch die bzw. in den jeweiligen Teilnehmern vorab geplant und bekannt. Bei einfachen Topologien, wie beispielsweise der vorliegenden linienförmigen Topologie des Kommunikationssystems 38, oder auch der ringförmigen Topologie des Kommunikationssystems 39 aus der FIG 2, ist es im Gegensatz zu bisher bekannten Verfahren erfindungsgemäß jedoch nicht notwendig, dass die Empfangszeitpunkte bzw. die Zeitpunkte zur Weiterleitung der eingespeisten Datentelegramme bei den durchleitenden Teilnehmern, beispielsweise bei den Teilnehmern 2, 3 und 4, ebenfalls vorab geplant werden müssen, wie dies beispielsweise im, aus der deutschen Patentanmeldung DE 100 58 524.8 bekannten Verfahren für die IRT-Kommunikation notwendig ist.

Unabhängig davon ist es jedoch trotzdem notwendig, dafür zu sorgen, dass einerseits kein echtzeitkritisches Datentelegramm verloren geht, und andererseits jedes echtzeitkritische Datentelegramm auch zum richtigen Empfänger zum richtigen Zeitpunkt gelangt. Durch das Einspeisen bzw. Weiterleiten von echtzeitkritischen Datentelegrammen von beispielsweise den Teilnehmern 1, 2, 3, 4, an den Teilnehmer 5, kann es zu Wartesituationen in den jeweiligen durchleitenden Teilnehmern 2,3,4 kommen. Aus diesem Grund ist in jedem Teilnehmer 1, 2, 3, 4, 5 erfindungsgemäß wenigstens ein Pufferspeicher vorgesehen, von denen aus Gründen der Übersichtlichkeit nur der Pufferspeicher 40 des Teilnehmers 2 in der FIG 1 abgebildet ist. Durch die Zwischenspeicherung von Datentelegrammen in den Pufferspeichern wird dafür gesorgt, dass kein echtzeitkritisches Datentelegramm verloren geht.

Dabei ist in jedem der Pufferspeicher, insbesondere Pufferspeicher 40 des Teilnehmers 2, jeweils ein maximaler freier Speicherplatz notwendig, in den alle echtzeitkritischen Datentelegramme, die zur Weiterleitung anstehen, auch tatsächlich zwischengespeichert werden können. Dieser maximal notwendige Speicherplatz lässt sich bei einfachen Topologien, beispielsweise der linienförmigen Anordnung der Teilnehmer 1, 2, 3, 4, 5 des Kommunikationssystems 38, lokal einfach berechnen. Wird beispielsweise vorausgesetzt, die Datentransferraten sind auf den jeweiligen Netzwerkverbindung 6 zwischen dem Teilnehmer 1 und 2, auf der Netzwerkverbindung 7 zwischen Teilnehmer 2 und 3, sowie auf der Netzwerkverbindungsstrecke 8 zwischen Teilnehmer 3 und 4 bzw. Netzwerkverbindung 9 zwischen Teilnehmer 4 und 5 jeweils gleich, dann entspricht dieser maximal benötigte freie Speicherplatz jeweils der Menge der Daten bzw. Datentelegramme, die lokal von den jeweiligen Teilnehmern eingespeist werden. Dabei liegt die worst case-Annahme zugrunde, dass sämtliche lokal eingespeisten Daten bzw. Datentelegramme zuerst versendet werden, bevor die zur Durchleitung anstehenden Datentelegramme weitergesendet werden dürfen. Dieser Speicherplatz muss entsprechend vorab in jedem der Teilnehmer reserviert werden.

Dazu wird erfindungsgemäß eine entsprechende Markierung im Pufferspeicher des jeweiligen Teilnehmers, insbesondere im Pufferspeicher 40 des Teilnehmers 2, gesetzt, die der zur Flussteuerung benötigten, vorhandenen Low Water Mark entspricht. Diese so genannte Low Water Mark ist ein Maß für den noch zur Verfügung stehenden, freien Speicherplatz im Pufferspeicher des jeweiligen Teilnehmers, insbesondere des Pufferspeichers 40 des Teilnehmers 2. Wird diese Grenze unterschritten, werden vom jeweiligen Teilnehmer, insbesondere Teilnehmer 2, nur noch echtzeitkritische Datentelegramme akzeptiert bzw. angenommen und weitergeleitet bzw. vor der Weiterleitung im jeweiligen Pufferspeicher zwischengespeichert. Einzige Ausnahme dieser Regelung sind Datentelegramme, die zur Flusssteuerung dienen. Diese Datentelegramme werden ebenfalls noch angenommen, während sämtliche übrigen Datentelegramme, insbesondere nichtechtzeitkritische Datentelegramme, die beispielsweise bei spontanem Internetverkehr auftreten, abgewiesen bzw. verworfen werden. Da die gesetzte Markierung, also die Low Water Mark, in jedem Teilnehmer der maximalen Größe des zu reservierenden freien Speicherplatzes entspricht, steht somit der für eine eventuelle Zwischenspeicherung von echtzeitkritischen Datentelegrammen maximal notwendige freie Speicherplatz immer zur Verfügung, d.h., es ist gewährleistet, dass kein echtzeitkritisches Datentelegramm aufgrund von Speicherplatzproblemen verloren geht, wodurch sonst eine erhebliche Störung des entsprechenden Kommunikationssystems 38 auftreten würde.

FIG 2 zeigt ein Blockschaltbild eines weiteren Ausführungsbeispiels eines erfindungsgemäßen ringförmigen Kommunikationssystems 39. Das Kommunikationssystem 39 besteht aus den Teilnehmern 10, 11, 12, 13, 14, die durch die Netzverbindungen 15, welche Teilnehmer 10 mit Teilnehmer 11 verbindet, Netzwerkverbindung 16, die Teilnehmer 11 mit Teilnehmer 12 verbindet, Netzwerkverbindung 17, die Teilnehmer 12 mit Teilnehmer 13 verbindet, Netzwerkverbindung 18, die Teilnehmer 13 mit Teilnehmer 14 verbindet, sowie Netzwerkverbindung 19, die Teilnehmer 14 mit Teilnehmer 10 verbindet und somit einen geschlossenen Ring darstellt. Auch in dieser einfachen Topologie, in diesem Fall der ringförmigen Struktur des Kommunikationssystems 39, steht erfindungsgemäß jedem der Teilnehmer 10, 11, 12, 13 und 14 jeweils wenigstens ein Pufferspeicher, von denen der Übersichtlichkeit halber nur der Pufferspeicher 41 des Teilnehmers 10 abgebildet wurde, zur Verfügung.

In der FIG 2 ist beispielsweise der Teilnehmer 10 ein Steuerungsrechner, der echtzeitkritische Daten an den Teilnehmer 13, beispielsweise ebenfalls ein Automatisierungsgerät, insbesondere ein Antrieb, sendet, wobei die übrigen Teilnehmer 11, 12 und 14 darüberhinaus ebenfalls echtzeitkritische Daten, insbesondere echtzeitkritische Peripherieabbilder, an den Teilnehmer 13 senden. Die Ausführungen aus der Beschreibung der FIG 1, des linienförmigen Kommunikationssystems 38, gelten sinngemäß auch für die ringförmige Anordnung der Teilnehmer des Kommunikationssystems 39.

FIG 3 zeigt ein Blockschaltbild, welches den Übertragungszyklus 31 sowie das Prinzip der automatischen Ermittlung der reservierten Zeitphase, des ersten Bereichs 20, mit Hilfe eines Timeout-Verfahrens zeigt.

Der Kommunikationszyklus bzw. Übertragungszyklus 31 ist beispielhaft in der FIG 3 in drei Bereiche unterteilt, wobei der erste Bereich 20 zur Übertragung von echtzeitkritischen Datentelegrammen und die weiteren Bereiche 34 und 35 zur Übertragung von nichtechtzeitkritischen Datentelegrammen vorgesehen sind. Dabei ist der weitere Bereich 34 zeitlich gesehen vor dem ersten Bereich 20 angeordnet, während sich der weitere Bereich 35 an den ersten Bereich 20 anschliesst.

Der erste Bereich 20 des Übertragungszyklus 31, der zur Übertragung von Datentelegrammen, die echtzeitkritische Daten enthalten, vorgesehen ist, wird durch einen zeitlichen Beginn 21 sowie durch ein Ende 22 begrenzt. Im gezeigten Beispiel ist die Aufteilung des Übertragungszyklus 31, der durch den zeitlichen Beginn 32 und das Ende 33 entsprechend zeitlich begrenzt wird, so aufgeteilt, dass mit dem zeitlichen Beginn 32 des Übertragungszyklus 31 ein weiterer Bereich 34, zur Übermittlung von nichtechtzeitkritischen Datentelegrammen , insbesondere spontaner Internetverkehr, beginnt, an den sich der erste Bereich 20 mit dem zeitlichen Beginn 21 anschließt, der zur Übertragung von echtzeitkritischen Datentelegrammen reserviert ist, woran sich mit dem Ende 22 des ersten Bereichs 20 der weitere Bereich 35 anschließt, in dem wiederum nichtechtzeitkritische Datentelegramme, insbesondere spontaner Internetverkehr, übertragen werden können.

Erfindungsgemäß wird wenigstens einmal, bevorzugt am Anfang, beispielsweise vor dem Beginn des ersten Übertragungszyklus, der zeitliche Beginn 21 des ersten Bereichs 20 eines Übertragungszyklus 31 festgelegt. Erfindungsgemäß garantiert nun jeder Teilnehmer des Kommunikationssystems, dass dieser zeitliche Beginn 21 in jedem weiteren Übertragungszyklus ebenfalls zum selben Zeitpunkt innerhalb des jeweiligen aktuellen Übertragungszyklus stattfindet. Dies bedeutet, dass die reservierte Zeitphase, der erste Bereich 20 eines Übertragungszyklus 31, in jedem Übertragungszyklus bei jedem Teilnehmer zum selben Zeitpunkt stattfindet. Gleichzeitig wird von jedem Teilnehmer sichergestellt, dass die Übertragung von nichtechtzeitkritischen Datentelegrammen, 36 und 37, die im Übertragungszyklus 31 im weiteren Bereich 34 vor dem ersten Bereich 20 übertragen werden sollen, vollständig abgeschlossen ist, bevor der zeitliche Beginn 21 des ersten Bereichs 20 des Übertragungszyklus 31 erreicht ist. Der jeweilige betroffene Teilnehmer überprüft also, ob sich beispielsweise die Übertragung des nichtechtzeitkritischen Datentelegramms 37 vollständig beenden lässt, bevor der zeitliche Beginn 21 erreicht wird. Dies ist vom jeweiligen Teilnehmer ohne weiteres zu berechnen, da ja die Größe des betreffenden Datentelegramms 37 sowie die Übertragungsgeschwindigkeit dem jeweiligen Teilnehmer bekannt sind. Falls der Sendevorgang tatsächlich vor dem zeitlichen Beginn 21 beendet werden kann, so wird das nichtechtzeitkritische Datentelegramm 37 noch gesendet. Im anderen Fall wird der Sendevorgang des Datentelegramms 37 nicht gestartet, sondern das entsprechende Datentelegramm wird in einem Pufferspeicher des jeweiligen Teilnehmers zwischengespeichert, und erst nach dem Ende 22 des ersten Bereichs 20 an den entsprechenden Empfänger weitergeleitet, vorausgesetzt es ist genügend freier Speicherplatz im Pufferspeicher des jeweiligen Teilnehmers vorhanden. Andernfalls würde das Datentelegramm 37 zurückgewiesen und/oder verworfen.

Der zeitliche Beginn 21 des ersten Bereichs 20 kann somit immer zu einem festen vorbestimmten Zeitpunkt beginnen und da von dem Teilnehmer entsprechend überwacht wird, dass der Datentransfer eines vorangehenden zu sendenden nicht echtzeitkritischen Datentelegramms 37 nicht in die Zeitphase des ersten Bereichs 20 hineinragt, kann dieser Beginn deshalb auch garantiert werden. Ist das Ende 22 des ersten Bereichs 20 erreicht, können innerhalb des weiteren Bereichs 35 bis zum Ende 33 des Übertragungszyklus 31 weitere nichtechtzeitkritische Datentelegramme 26 übertragen werden.

Die zeitliche Länge des ersten Bereichs 20 ist mittels eines Timeout-Verfahrens automatisch einstellbar. Beispielsweise fängt mit dem zeitlichen Beginn 21 des ersten Bereichs 20 des Übertragungszyklus 31 eine Timeout-Zeit 27 zu laufen an. Dies kann durch einen Timer, der im jeweiligen Teilnehmer realisiert ist, oder durch eine andere software- oder hardware-technische Lösung realisiert werden, die entsprechend mit den zeitlichen Gegebenheiten der Übertragungszyklen geeignet gekoppelt ist. Die zeitliche Dauer einer solchen Timeout-Zeit 27 ist dabei parametrierbar und entsprechend einstellbar. Steht nun innerhalb der ablaufenden Time-out-Zeit 27 beispielsweise ein echtzeitkritisches Datentelegramm 23 zum Senden an, so wird dieses echtzeitkritische Datentelegramm 23 gesendet und mit dem Ende des Sendevorgangs läuft erneut eine Timeout-Zeit 28 zu laufen an. Die Timeout-Zeit 28 hat dabei bevorzugt die gleiche zeitliche Länge wie die Timeout-Zeit 27. Steht vor dem Ablauf der Timeout-Zeit 28 ein weiteres echtzeitkritisches Datentelegramm 24 zum Senden an, so wird dieses Datentelegramm gesendet und die zeitliche Dauer des ersten Bereichs 20 verlängert sich weiter. Nach dem Beenden des Sendevorgangs des Datentelegramms 24 fängt erneut eine Timeout-Zeit 29 zu laufen an, die wiederum bevorzugt die gleiche zeitliche Ausdehnung wie die jeweiligen Timeout-Zeiten 27 und 28 aufweist. Steht vor Ablauf der Timeout-Zeit 29 wiederum ein echtzeitkritisches Datentelegramm 25 zum Senden an, so wird auch dieses Datentelegramm 25 gesendet und der erste Bereich 20 des Übertragungszyklus 31, also der Bereich, der zur Übertragung echtzeitkritischer Datentelegramme reserviert ist, wird weiter verlängert. Nach Beendigung des Sendevorgangs des echtzeitkritischen Datentelegramms 25 fängt erneut eine Timeout-Zeit 30 zu laufen an, mit wiederum der gleichen zeitlichen Ausdrehnung wie die jeweiligen Timeout-Zeiten 27, 28 und 29. Falls beispielsweise bis zum Ablauf der Timeout-Zeit 30 kein weiteres echtzeitkritisches Datentelegramm zum Senden ansteht, wird der erste Bereich 20 mit dem Ende der Timeout-Zeit 30 beendet, so dass das Ende 22 des ersten Bereichs 20 mit dem Ende der Timeout-Zeit 30 zusammenfällt. Die zeitliche Länge des ersten Bereichs 20 ist somit automatisch einstellbar. Wären weitere echtzeitkritische Datentelegramme zur Weiterleitung und/oder Übertragung vorhanden, so würde sich der erste Bereich entsprechend weiter verlängern, bis ggf. das Ende 33 des Übertragungszyklus 31 erreicht ist. In einem solchen Fall würde es keinen weiteren Bereich 35 geben, so dass dann keine weiteren nichtechtzeitkritischen Datentelegramme übertragen werden könnten. Im anderen Fall, falls innerhalb des Ablaufs der Timeout-Zeit 27 kein echtzeitkritisches Datentelegramm, beispielsweise echtzeitkritisches Datentelegramm 23, zur Übertragung anstehen würde, würde der erste Bereich 20 des Übertragungszyklus 31 mit Ende der Timeout-Zeit 27 sofort beendet werden, so dass der weitere Bereich 35 zur Übertragung von nichtechtzeitkritischen Datentelegrammen entsprechend erweitert ist.

Erfindungsgemäß sind die Sende- und Empfangszeitpunkte der echtzeitkritischen Datentelegramme, beispielsweise Datentelegramme 23, 24 und 25, bei der Weiterleitung in den durchleitenden Teilnehmern nicht vorher geplant, wie dies beim IRT-Verfahren zwingend notwendig ist. Lediglich die jeweiligen Einspeisezeitpunkte der echtzeitkritischen Datentelegramme, beispielsweise Datentelegramme 23, 24 und 25, in das Kommunikationssystem müssen vorab geplant werden. Das erfindungsgemäße Verfahren funktioniert natürlich auch dann, wenn alle Sende- und Empfangszeitpunkte der echtzeitkritischen Datentelegramme gemäß dem IRT-Verfahren in allen beteiligten Teilnehmern im Voraus eingeplant sind. Eine solche Planung ist jedoch bei Anwendung des erfindungsgemäßen Verfahrens in diesem Fall wie beschrieben nicht notwendig.

Zusammengefasst handelt es sich bei der Erfindung um ein Verfahren zur Übertragung von Datentelegrammen in einem geschalteten, zyklischen Kommunikationssystem, beispielsweise mit einer linien- oder ringförmigen Anordnung der Teilnehmer des jeweiligen Kommunikationssystems 38, 39. Bei dem Verfahren werden echtzeitkritische Datentelegramme in einem reservierten ersten Bereich 20 eines Übertragungszyklus 31 übertragen, ohne deren Sende- und Empfangszeitpunkte in den durchleitenden Teilnehmern vorab planen zu müssen, wobei der zeitliche Beginn 21 des ersten Bereichs 20 eines Übertragungszyklus 31 von allen Teilnehmern in allen Übertragungszyklen durch Überwachung garantiert wird. Die zeitliche Dauer des ersten Bereichs 20 eines Übertragungszyklus 31 ist dabei durch Anwendung eines Time-Out-Verfahrens automatisch einstellbar.

## Patentansprüche

1. Verfahren zur Übertragung von Datentelegrammen in einem geschalteten, zyklischen Kommunikationssystem (38,39) mit mehreren Teilnehmern (1,2,3,4,5), die mittels Netzwerkverbindungen (6,7,8,9) miteinander verbunden sind, wobei jeder Teilnehmer (1,2,3,4,5) als Sender und/oder Empfänger von Datentelegrammen ausgeprägt ist und jeder Teilnehmer (1,2,3,4,5) wenigstens einen Pufferspeicher (40) zur Speicherung von Datentelegrammen aufweist, wobei die Datentelegramme in Übertragungszyklen übertragen werden und jeder Übertragungszyklus (31) wenigstens einen ersten Bereich (20) zur Übertragung von Datentelegrammen mit echtzeitkritischen Daten und wenigstens einen weiteren Bereich (34,35) zur Übertragung von Datentelegrammen mit nichtechtzeitkritischen Daten aufweist, mit folgenden Schritten:
- Festlegung des zeitlichen Beginns des ersten Bereichs (20) eines Übertragungszyklus (31) innerhalb des Übertragungszyklus (31);
- Sicherstellung, dass die Übertragung eines nichtechtzeitkritischen Datentelegramms (26,36,37) zu Beginn des ersten Bereichs (20) des Übertragungszyklus (31) abgeschlossen ist;
**gekennzeichnet durch** die weiteren Schritte:
- Kennzeichnung der Datentelegramme, die echtzeitkritische Daten enthalten;
- Reservierung freien Speicherplatzes im Pufferspeicher (40) jedes Teilnehmers (1,2,3,4,5) zur Zwischenspeicherung der echtzeitkritischen Datentelegramme (23,24,25);
- automatische Einstellung der zeitlichen Länge des ersten Bereichs (20) des Übertragungszyklus (31) mittels eines Timeout-Verfahrens, wobei mit dem zeitlichen Beginn (21) des ersten Bereichs (20) des Übertragungszyklus (31) oder nach dem Ende des Sendens eines echtzeitkritischen Datentelegramms (23) eine Timeout-Zeit (27) zu laufen beginnt, wobei der erste Bereich (20) des Übertragungszyklus (31)
- mit dem Ablauf der Timeout-Zeit (27) beendet wird, falls innerhalb dieser Timeout-Zeit (27) kein Sendebeginn eines echtzeitkritischen Datentelegramms (23) liegt, oder wobei der erste Bereich (20) nicht beendet wird, falls innerhalb der Timeout-Zeit (27) der Sendebeginn eines echtzeitkritischen Datentelegramms (23) liegt.

2. Verfahren nach Anspruch 1,
**dadurch gekennzeichnet,**
**dass** die zeitliche Dauer der Timeout-Zeit (27) einstellbar ist.

3. Verfahren nach Anspruch 1 oder 2,
**dadurch gekennzeichnet,**
**dass** das Kommunikationssystem (38,39) aus einem oder mehreren Segmenten aufgebaut ist, wobei wenigstens ein Segment keine Verzweigungen und/oder keine Zusammenführungen aufweist.

4. Verfahren nach einem der vorhergehenden Ansprüche,
**dadurch gekennzeichnet,**
**dass** Datentelegramme, die echtzeitkritische Daten enthalten, mit einer eindeutigen Header-Kennung **gekennzeichnet** werden.

5. Verfahren nach einem der vorhergehenden Ansprüche,
**dadurch gekennzeichnet,**
**dass** ein nichtechtzeitkritisches Datentelegramm (26,36,37), das vor dem zeitlichen Beginn (21) des ersten Bereichs (20) des Übertragungszyklus (31) bei einem Teilnehmer (1,2,3,4,5) zum Senden ansteht, nicht gesendet wird, in dem Pufferspeicher (40) des jeweiligen Teilnehmers (1,2,3,4,5) zwischengespeichert wird, falls die Übertragung des zu sendenden Datentelegramms (26,36,37) nicht bis zum zeitlichen Beginn (21) des ersten Bereichs (20) des Übertragungszyklus (31) abgeschlossen ist, und erst nach dem Ende (22) des ersten Bereichs (20) des übertragungszyklus (31) gesendet wird.

6. Verfahren nach einem der vorhergehenden Ansprüche,
**dadurch gekennzeichnet,**
**dass** die maximale Größe des zur Zwischenspeicherung der echtzeitkritischen Datentelegramme (23,24,25) zu reservierenden freien Speicherplatzes der Menge der beim jeweiligen Teilnehmer (1,2,3,4,5) einzuspeisenden Daten bzw. Datentelegrammen entspricht.

7. Verfahren nach Anspruch 6,
**dadurch gekennzeichnet,**
**dass** zur Steuerung der Reservierung des freien Speicherplatzes im Pufferspeicher (40) des jeweiligen Teilnehmers (1,2,3,4,5) eine Markierung gesetzt wird, die der maximalen Größe des zu reservierenden freien Speicherplatzes entspricht.

8. Verfahren nach Anspruch 7,
**dadurch gekennzeichnet,**
**dass** bei Unterschreitung des durch die Markierung **gekennzeichnet**en, zu reservierenden freien Speicherplatzes im Pufferspeicher (40) des jeweiligen Teilnehmers (1,2,3,4,5) echtzeitkritische Datentelegramme (23,24,25) und/oder Steuerungstelegramme vom jeweiligen Teilnehmer (1, 2, 3, 4, 5) angenommen oder hichtechtzeitkritische Datentelegramme (26, 36, 37) zurückgewiesen und/oder verworfen werden.

9. Teilnehmer für ein geschaltetes, zyklisches Kommunikationssystem (38,39) bestehend aus einem oder mehreren Segmenten, wobei wenigstens ein Segment keine Verzweigungen und/oder keine Zusammenführungen aufweist, wobei der Teilnehmer (1,2,3,4,5) als Sender und/oder Empfänger von Datentelegrammen ausgeprägt ist und wenigstens einen Pufferspeicher (40) zur Speicherung von Datentelegrammen aufweist, wobei die Datentelegramme in Übertragungszyklen übertragen werden und jeder Übertragungszyklus (31) wenigstens einen ersten Bereich (20) zur Übertragung von Datentelegrammen mit echtzeitkritischen Daten und wenigstens einen weiteren Bereich (34,35) zur Übertragung von Datentelegrammen mit nichtechtzeitkritischen Daten aufweist, mit:
- Mitteln zur Festlegung des zeitlichen Beginns des ersten Bereichs (20) eines Übertragungszyklus (31) innerhalb des Übertragungszyklus (31);
- Mitteln zur Sicherstellung, dass die Übertragung eines nichtechtzeitkritischen Datentelegramms (26,36,37) zu Beginn des ersten Bereichs (20) des Übertragungszyklus (31) abgeschlossen ist,
**dadurch gekennzeichnet, dass** weiterhin vorgesehen sind:
- Mittel zur Kennzeichnung der Datentelegramme, die echtzeitkritische Daten enthalten;
- Mittel zur Reservierung freien Speicherplatzes im Pufferspeicher (40) jedes Teilnehmers (1, 2, 3, 4, 5) zur Zwischenspeicherung der echtzeitkritischen Datentelegramme (23, 24, 25) und
- Mittel zur automatischen Einstellung der zeitlichen Länge des ersten Bereichs (20) des Übertragungszyklus (31) mittels eines Timeout-Verfahrens, wobei mit dem zeitlichen Beginn (21) des ersten Bereichs (20) des Übertragungszyklus (31) oder nach dem Ende des Sendens eines echtzeitkritischen Datentelegramms ( 23) eine Timeout-Zeit (27) zu laufen beginnt, wobei der erste Bereich (20) des Übertragungszyklus (31) mit dem Ablauf der Timeout-Zeit (27) beendet wird, falls innerhalb dieser Timeout-Zeit (27) kein Sendebeginn eines echtzeitkritischen Datentelegramms (23) liegt, oder wobei der erste Bereich (20) nicht beendet wird, falls innerhalb der Timeout-Zeit (27) der Sendebeginn eines echtzeitkritischen Datentelegramms (23) liegt.

10. Teilnehmer nach Anspruch 9,
**dadurch gekennzeichnet,**
**dass** der Teilnehmer (1,2,3,4,5) die Datentelegramme, die echtzeitkritische Daten enthalten, mit einer eindeutigen Header-Kennung kennzeichnet.

11. Teilnehmer nach einem der Ansprüche 9 oder 10,
**dadurch gekennzeichnet,**
**dass** der Teilnehmer (1,2,3,4,5) ein nichtechtzeitkritisches Datentelegramm (26,36,37), das vor dem zeitlichen Beginn (21) des ersten Bereichs (20) des Übertragungszyklus (31) zum Senden ansteht, nicht sendet, im Pufferspeicher (40) des jeweiligen Teilnehmers (1,2,3,4,5) zwischenspeichert, falls die Übertragung des zu sendenden Datentelegramms (26, 36, 37) nicht bis zum zeitlichen Beginn (21) des ersten Bereichs (20) des Übertragungszyklus (31) abgeschlossen ist, und erst nach dem Ende (22) des ersten Bereichs (20) des Übertragungszyklus (31) sendet.

12. Teilnehmer nach einem der Ansprüche 9 bis 11,
**dadurch gekennzeichnet,**
**dass** der Teilnehmer (1,2,3,4,5) die zeitliche Dauer der Time-out-Zeit (27) einstellt.

13. Teilnehmer nach einem der Ansprüche 9 bis 12,
**dadurch gekennzeichnet,**
**dass** die maximale Größe des zur Zwischenspeicherung der echtzeitkritischen Datentelegramme (23,24,25) zu reservierenden freien Speicherplatzes der Menge der beim jeweiligen Teilnehmer (1, 2, 3, 4, 5) einzuspeisenden Daten bzw. Datentelegrammen entspricht.

14. Teilnehmer nach Anspruch 13,
**dadurch gekennzeichnet,**
**dass** der Teilnehmer (1,2,3,4,5) zur Steuerung der Reservierung des freien Speicherplatzes im Pufferspeicher (40) des jeweiligen Teilnehmers (1,2,3,4,5) eine Markierung setzt, die der maximalen Größe des zu reservierenden freien Speicherplatzes entspricht.

15. Teilnehmer nach Anspruch 14,
**dadurch gekennzeichnet,**
**dass** der Teilnehmer (1,2,3,4,5) bei Unterschreitung des durch die Markierung **gekennzeichnet**en, zu reservierenden freien Speicherplatzes im Pufferspeicher (40) echtzeitkritische Datentelegramme (23,24,25) und/oder Steuerungstelegramme annimmt oder nichtechtzeitkritische Datentelegramme (26,36,37) zurückweist und/oder verwirft.

16. Teilnehmer nach einem der Ansprüche 9 bis 15,
**dadurch gekennzeichnet,**
**dass** der Teilnehmer (1,2,3,4,5) ein Netzknoten mit einer integrierten Koppeleinheit ist.

17. Teilnehmer nach Anspruch 16,
**dadurch gekennzeichnet,**
**dass** die integrierte Koppeleinheit ein Realtime Ethernet Switch ist.

18. Teilnehmer nach einem der Ansprüche 9 bis 17,
**dadurch gekennzeichnet,**
**dass** der Teilnehmer (1,2,3,4,5) ein Automatisierungsgerät ist.

19. Kommunikationssystem mit mehreren Teilnehmern nach einem der Ansprüche 9 bis 18.

20. Kommunikationssystem nach Anspruch 19,
**dadurch gekennzeichnet,**
**dass** das Kommunikationssystem ein Automatisierungssystem ist.

21. Kommunikationssystem nach einem der Ansprüche 19 oder 20,
**dadurch gekennzeichnet,**
**dass** das Kommunikationssystem aus einer linienförmigen oder einer ringförmigen Anordnung von Teilnehmern besteht.

## Claims

1. Method for transmitting data messages in a switched, cyclic communication system (38, 39) having a plurality of subscribers (1, 2, 3, 4, 5) which are connected to one another by means of network connections (6, 7, 8, 9), where each subscriber (1, 2, 3, 4, 5) is in the form of a sender and/or receiver of data messages, and each subscriber (1, 2, 3, 4, 5) has at least one buffer store (40) for storing data messages, the data messages being transmitted in transmission cycles, and each transmission cycle (31) having at least one first range (20) for transmitting data messages containing realtime-critical data and at least one further range (34, 35) for transmitting data messages containing non-realtime critical data, having the following steps:
- the starting time of the first range (20) of a transmission cycle (31) is stipulated within the transmission cycle (31);
- it is ensured that the transmission of a non-realtime-critical data message (26, 36, 37) has concluded at the start of the first range (20) of the transmission cycle (31);
**characterized by** the following further steps:
- the data messages containing realtime-critical data are flagged;
- free memory space is reserved in the buffer store (40) in each subscriber (1, 2, 3, 4, 5) for the purpose of buffer-storing the realtime-critical data messages (23, 24, 25);
- the length of time for the first range (20) of the transmission cycle (31) is automatically set using a timeout method, with a timeout time (27) starting to run at the starting time (21) of the first range (20) of the transmission cycle (31) or after the end of a realtime-critical data message (23) being sent, with the first range (20) of the transmission cycle (31) being terminated when the timeout time (27) runs out if a realtime-critical data message (23) does not start to be sent within this timeout time (27), or with the first range (20) not being terminated if a realtime-critical data message (23) does start to be sent within the timeout time (27).

2. Method according to claim 1,
**characterized**
**in that** the time for which the timeout time (27) lasts can be set.

3. Method according to claim 1 or 2,
**characterized**
**in that** the communication system (38, 39) is designed from one or more segments, with at least one segment having no branches and/or no junctions.

4. Method according to one of the preceding claims,
**characterized**
**in that** data messages which contain realtime-critical data are flagged using a distinct header identifier.

5. Method according to one of the preceding claims,
**characterized**
**in that** a non-realtime-critical data message (26, 36, 37) which is waiting to be sent on a subscriber (1, 2, 3, 4, 5) before the starting time (21) of the first range (20) of the transmission cycle (31) is not sent, is buffer-stored in the buffer store (40) in the respective subscriber (1, 2, 3, 4, 5) if the transmission of the data message (26, 36, 37) which is to be sent has not concluded before the starting time (21) of the first range (20) of the transmission cycle (31), and is sent only after the end (22) of the first range (20) of the transmission cycle (31).

6. Method according to one of the preceding claims,
**characterized**
**in that** the maximum size of the free memory space which is to be reserved for buffer-storing the realtime-critical data messages (23, 24, 25) corresponds to the volume of the data or data messages which are to be supplied to the respective subscriber (1, 2, 3, 4, 5).

7. Method according to claim 6,
**characterized**
**in that** the reservation of the free memory space in the buffer store (40) in the respective subscriber (1, 2, 3, 4, 5) is controlled by setting a marker which corresponds to the maximum size of the free memory space which is to be reserved.

8. Method according to claim 7,
**characterized**
**in that** if the free memory space to be reserved which is flagged by the marker is not filled in the buffer store (40) in the respective subscriber (1, 2, 3, 4, 5) then realtime-critical data messages (23, 24, 25) and/or control messages are accepted by the respective subscriber (1, 2, 3, 4, 5) or non-realtime-critical data messages (26, 36, 37) are rejected and/or discarded.

9. Subscriber for a switched, cyclic communication system (38, 39) comprising one or more segments, where at least one segment has no branches and/or no junctions, with the subscriber (1, 2, 3, 4, 5) being in the form of a sender and/or receiver of data messages and having at least one buffer store (40) for storing data messages, the data messages being transmitted in transmission cycles, and each transmission cycle (31) having at least one first range (20) for transmitting data messages containing realtime-critical data and at least one further range (34, 35) for transmitting data messages containing non-realtime-critical data, having:
- means for stipulating the starting time of the first range (20) of a transmission cycle (31) within the transmission cycle (31);
- means for ensuring that the transmission of a non-realtime-critical data message (26, 36, 37) has concluded at the start of the first range (20) of the transmission cycle (31),
**characterized in that** the following are also provided:
- means for flagging the data messages which contain real-time-critical data;
- means for reserving free memory space in the buffer store (40) in each subscriber (1, 2, 3, 4, 5) for the purpose of buffer-storing the realtime-critical data messages (23, 24, 25), and
- means for automatically setting the length of time for the first range (20) of the transmission cycle (31) using a timeout method, with a timeout time (27) starting to run at the starting time (21) of the first range (20) of the transmission cycle (21) or after the end of a realtime-critical data message (23) being sent, with the first range (20) of the transmission cycle (31) being terminated when the timeout time (27) runs out if a realtime-critical data message (23) does not start to be sent within this timeout time (27), or with the first range (20) not being terminated if a realtime-critical data message (23) does start to be sent within the timeout time (27).

10. Subscriber according to claim 9,
**characterized**
**in that** the subscriber (1, 2, 3, 4, 5) flags the data messages containing realtime-critical data using a distinct header identifier.

11. Subscriber according to either of claims 9 and 10,
**characterized**
**in that** the subscriber (1, 2, 3, 4, 5) does not send a non-realtime-critical data message (26, 36, 37) which is waiting to be sent before the starting time (21) of the first range (20) of the transmission cycle (31), buffers-stores it in the buffer store (40) in the respective subscriber (1, 2, 3, 4, 5) if the transmission of the data message (26, 36, 37) which is to be sent has not concluded before the starting time (21) of the first range (20) of the transmission cycle (31), and sends it only after the end (22) of the first range (20) of the transmission cycle (31).

12. Subscriber according to one of claims 9 to 11,
**characterized**
**in that** the subscriber (1, 2, 3, 4, 5) sets the time for which the timeout time (27) lasts.

13. Subscriber according to one of claims 9 to 12,
**characterized**
**in that** the maximum size of the free memory space which is to be reserved for buffer-storing the realtime-critical data messages (23, 24, 25) corresponds to the volume of the data or data messages which are to be supplied to the respective subscriber (1, 2, 3, 4, 5).

14. Subscriber according to claim 13,
**characterized**
**in that** the subscriber (1, 2, 3, 4, 5) controls the reservation of the free memory space in the buffer store (40) in the respective subscriber (1, 2, 3, 4, 5) by setting a marker which corresponds to the maximum size of the free memory space which is to be reserved.

15. Subscriber according to claim 14,
**characterized**
**in that** if the free memory space to be reserved which is flagged by the marker is not filled in the buffer store (40) then the subscriber (1, 2, 3, 4, 5) accepts realtime-critical data messages (23, 24, 25) and/or control messages or rejects and/or discards non-realtime-critical data messages (26, 36, 37).

16. Subscriber according to one of claims 9 to 15,
**characterized**
**in that** the subscriber (1, 2, 3, 4, 5) is a network node with an integrated switching unit.

17. Subscriber according to claim 16,
**characterized**
**in that** the integrated switching unit is a Realtime Ethernet Switch.

18. Subscriber according to one of claims 9 to 17,
**characterized**
**in that** the subscriber (1, 2, 3, 4, 5) is an automation device.

19. Communication system having a plurality of subscribers according to one of claims 9 to 18.

20. Communication system according to claim 19,
**characterized**
**in that** the communication system is an automation system.

21. Communication system according to either of claims 19 and 20,
**characterized**
**in that** the communication system comprises a linear or ringshaped arrangement of subscribers.

## Revendications

1. Procédé pour la transmission de télégrammes de données dans un système de communication cyclique commuté (38, 39) avec plusieurs utilisateurs (1, 2, 3, 4, 5) qui sont reliés entre eux au moyen de liaisons de réseau (6, 7, 8, 9), chaque utilisateur (1, 2, 3, 4, 5) étant conçu comme émetteur et/ou récepteur de télégrammes de données et chaque utilisateur (1, 2, 3, 4, 5) comportant au moins une mémoire tampon (40) pour la mémorisation de télégrammes de données, les télégrammes de données étant transmis dans des cycles de transmission et chaque cycle de transmission (31) comportant au moins une première plage (20) pour la transmission de télégrammes de données avec des données qui sont critiques en temps réel et au moins une autre plage (34, 35) pour la transmission de télégrammes de données avec des données qui ne sont pas critiques en temps réel, avec les étapes suivantes :
- spécifier le début temporel de la première plage (20) d'un cycle de transmission (31) à l'intérieur du cycle de transmission (31) ;
- garantir que la transmission d'un télégramme de données non critique en temps réel (26, 36, 37) est terminée au début de la première plage (20) du cycle de transmission (31) ;
**caractérisé par** les autres étapes :
- caractériser les télégrammes de données qui contiennent des données critiques en temps réel ;
- réserver de la place de mémoire libre dans la mémoire tampon (40) de chaque utilisateur (1, 2, 3, 4, 5) pour la mémorisation temporaire des télégrammes de données critiques en temps réel (23, 24, 25) ;
- régler automatiquement la longueur temporelle de la première plage (20) du cycle de transmission (31) au moyen d'un procédé de temporisation, un délai de temporisation (27) commençant à s'écouler au début temporel (21) de la première plage (20) du cycle de transmission (31) ou après la fin de l'émission d'un télégramme de données critique en temps réel (23), la première plage (20) du cycle de transmission (31) étant terminée avec l'expiration du délai de temporisation (27) si aucun début d'émission d'un télégramme de données critique en temps réel (23) ne se trouve à l'intérieur de ce délai de temporisation (27) ou la première plage (20) n'étant pas terminée si le début d'émission d'un télégramme de données critique en temps réel (23) se trouve à l'intérieur du délai de temporisation (27).

2. Procédé selon la revendication 1,
**caractérisé par le fait que** la durée temporelle du délai de temporisation (27) est réglable.

3. Procédé selon la revendication 1 ou 2,
**caractérisé par le fait que** le système de communication (38, 39) est construit à partir d'un ou plusieurs segments, au moins un segment ne comportant pas de ramifications et/ou de réunions.

4. Procédé selon l'une des revendications précédentes,
**caractérisé par le fait que** des télégrammes de données qui contiennent des données critiques en temps réel sont **caractérisés par** un identificateur d'en-tête univoque.

5. Procédé selon l'une des revendications précédentes,
**caractérisé par le fait qu'**un télégramme de données non critique en temps réel (26, 36, 37) qui apparaît chez un utilisateur (1, 2, 3, 4, 5) en vue d'une émission et avant le début temporel (21) de la première plage (20) du cycle de transmission (31) n'est pas émis, est mémorisé temporairement dans la mémoire tampon (40) de l'utilisateur respectif (1, 2, 3, 4, 5) si la transmission du télégramme de données à émettre (26, 36, 37) n'est pas terminée au début temporel (21) de la première plage (20) du cycle de transmission (31) et est émis seulement après la fin (22) de la première plage (20) du cycle de transmission (31).

6. Procédé selon l'une des revendications précédentes,
**caractérisé par le fait que** la grandeur maximale de la place de mémoire libre à réserver pour la mémorisation temporaire des télégrammes de données critiques en temps réel (23, 24, 25) correspond à la quantité des données ou télégrammes de données à introduire auprès de l'utilisateur respectif (1, 2, 3, 4, 5).

7. Procédé selon la revendication 6,
**caractérisé par le fait que**, pour la commande de la réservation de la place de mémoire libre dans la mémoire tampon (40) de l'utilisateur respectif (1, 2, 3, 4, 5), on met un repère qui correspond à la grandeur maximale de la place de mémoire libre à réserver.

8. Procédé selon la revendication 7,
**caractérisé par le fait que**, lorsqu'on passe en dessous de la place de mémoire libre à réserver et **caractérisée par** le repère dans la mémoire tampon (40) de l'utilisateur respectif (1, 2, 3, 4, 5), des télégrammes de données critiques en temps réel (23, 24, 25) et/ou des télégrammes de commande sont acceptés par l'utilisateur respectif (1, 2, 3, 4, 5) ou des télégrammes de données non critiques en temps réel (26, 36, 37) sont refusés et/ou rejetés.

9. Utilisateur pour un système de communication cyclique commuté (38, 39) constitué d'un ou plusieurs segments, au moins un segment ne comportant pas de ramifications et/ou de réunions, l'utilisateur (1, 2, 3, 4, 5) étant conçu comme émetteur et/ou récepteur de télégrammes de données et comportant au moins une mémoire tampon (40) pour la mémorisation de télégrammes de données, les télégrammes de données étant transmis dans des cycles de transmission et chaque cycle de transmission (31) comportant au moins une première plage (20) pour la transmission de télégrammes de données avec des données critiques en temps réel et au moins une autre plage (34, 35) pour la transmission de télégrammes de données avec des données non critiques en temps réel, avec :
- des moyens pour spécifier le début temporel de la première plage (20) d'un cycle de transmission (31) à l'intérieur du cycle de transmission (31) ;
- des moyens pour garantir que la transmission d'un télégramme de données non critique en temps réel (26, 36, 37) est terminée au début de la première plage (20) du cycle de transmission (31) ;
**caractérisé par le fait qu'**il est aussi prévu :
- des moyens pour caractériser les télégrammes de données qui contiennent des données critiques en temps réel ;
- des moyens pour réserver de la place de mémoire libre dans la mémoire tampon (40) de chaque utilisateur (1, 2, 3, 4, 5) pour la mémorisation temporaire des télégrammes de données critiques en temps réel (23, 24, 25) ; et
- des moyens pour régler automatiquement la longueur temporelle de la première plage (20) du cycle de transmission (31) au moyen d'un procédé de temporisation, un délai de temporisation (27) commençant à s'écouler au début temporel (21) de la première plage (20) du cycle de transmission (31) ou après la fin de l'émission d'un télégramme de données critique en temps réel (23), la première plage (20) du cycle de transmission (31) étant terminée avec l'expiration du délai de temporisation (27) si aucun début d'émission d'un télégramme de données critique en temps réel (23) ne se trouve à l'intérieur de ce délai de temporisation (27) ou la première plage (20) n'étant pas terminée si le début d'émission d'un télégramme de données critique en temps réel (23) se trouve à l'intérieur du délai de temporisation (27).

10. Utilisateur selon la revendication 9,
**caractérisé par le fait que** l'utilisateur (1, 2, 3, 4, 5) caractérise les télégrammes de données qui contiennent des données critiques en temps réel avec un identificateur d'entête univoque.

11. Utilisateur selon l'une des revendications 9 ou 10,
**caractérisé par le fait que** l'utilisateur (1, 2, 3, 4, 5) n'émet pas un télégramme de données non critique en temps réel (26, 36, 37) qui apparaît en vue d'une émission et avant le début temporel (21) de la première plage (20) du cycle de transmission (31), le mémorise temporairement dans la mémoire tampon (40) de l'utilisateur respectif (1, 2, 3, 4, 5) si la transmission du télégramme de données à émettre (26, 36, 37) n'est pas terminée au début temporel (21) de la première plage (20) du cycle de transmission (31) et l'émet seulement après la fin (22) de la première plage (20) du cycle de transmission (31).

12. Utilisateur selon l'une des revendications 9 à 11,
**caractérisé par le fait que** l'utilisateur (1, 2, 3, 4, 5) règle la durée temporelle du délai de temporisation (27).

13. Utilisateur selon l'une des revendications 9 à 12,
**caractérisé par le fait que** la grandeur maximale de la place de mémoire libre à réserver pour la mémorisation temporaire des télégrammes de données critiques en temps réel (23, 24, 25) correspond à la quantité des données ou télégrammes de données à introduire auprès de l'utilisateur respectif (1, 2, 3, 4, 5).

14. Utilisateur selon la revendication 13,
**caractérisé par le fait que**, pour la commande de la réservation de la place de mémoire libre dans la mémoire tampon (40) de l'utilisateur respectif (1, 2, 3, 4, 5), l'utilisateur (1, 2, 3, 4, 5) met un repère qui correspond à la grandeur maximale de la place de mémoire libre à réserver.

15. Utilisateur selon la revendication 14,
**caractérisé par le fait que**, lorsqu'il passe en dessous de la place de mémoire libre à réserver et **caractérisée par** le repère dans la mémoire tampon (40), l'utilisateur respectif (1, 2, 3, 4, 5) accepte des télégrammes de données critiques en temps réel (23, 24, 25) et/ou des télégrammes de commande ou refuse et/ou rejette des télégrammes de données non critiques en temps réel (26, 36, 37).

16. Utilisateur selon l'une des revendications 9 à 15,
**caractérisé par le fait que** l'utilisateur (1, 2, 3, 4, 5) est un noeud de réseau avec une unité de connexion intégrée.

17. Utilisateur selon la revendication 16,
**caractérisé par le fait que** l'unité de connexion intégrée est un commutateur Ethernet en temps réel aussi appelé Realtime Ethernet Switch.

18. Utilisateur selon l'une des revendications 9 à 17,
**caractérisé par le fait que** l'utilisateur (1, 2, 3, 4, 5) est un appareil d'automatisation.

19. Système de communication avec plusieurs utilisateurs selon l'une des revendications 9 à 18.

20. Système de communication selon la revendication 19,
**caractérisé par le fait que** le système de communication est un système d'automatisation.

21. Système de communication selon l'une des revendications 19 ou 20,
**caractérisé par le fait que** le système de communication est constitué d'un agencement d'utilisateurs en ligne ou en anneau.
